# EUROPEAN PATENT SPECIFICATION

(11) **EP 3 799 996 B1**
(45) Date of publication and mention of the grant of the patent: **07.06.2023**
(21) Application number: 20193352.0
(22) Date of filing: 28.08.2020
(51) Int. Cl.: B23K 10/00, B23K 37/02

(54) **SYSTEM FOR AND METHOD OF CUTTING WITH A PLASMA TORCH**
SYSTEM UND VERFAHREN ZUM SCHNEIDEN MIT EINEM PLASMABRENNER
SYSTÈME ET MÉTHODE DE DÉCOUPE AVEC UNE TORCHE PLASMA

(30) Priority: 28.08.2019 US 201916553345
(43) Date of publication of application: 07.04.2021
(73) Proprietor: Lincoln Global, Inc., Santa Fe Springs, CA 90670 (US)
(72) Inventor: WILLIAMS, Christopher J., Norham, Northumberland TD15 2JY (GB)
(74) Representative: Grosse Schumacher Knauer von Hirschhausen

(56) References cited:
- CN-U- 204 295 130
- CN-U- 207 664 753
- JP-A- H11 226 743
- US-B2- 9 604 304

## Description

### BACKGROUND OF THE INVENTION

### Field of the Invention

The present invention relates to a system for and a method of plasma cutting according to the preamble of claim 1 respectively 10 (see for example JP H11 226 743 A), and thus generally to cutting systems that utilize plasma torches, and to controlling torch movements during a cutting operation.

### Description of Related Art

A number of automated plasma systems have been developed which use computer numerical control (CNC) technology to control the movement and process of a plasma cutting operation, including controlling the movement of the cutting torch. For example, a CNC controller can move a plasma torch in perpendicular X and Y directions along a workpiece to cut a desired shape from the workpiece. However, the plasma jet may not be symmetrical or straight, and its cut characteristics and quality can change with the cutting direction, which negatively impacts the accuracy of the cuts made by the torch. As the torch is moved about the workpiece in different directions, the edges of the cut may have different bevels, amount of dross, kerf width, etc. Due to the lack of consistency in making cut edges, a trial and error approach may be needed to obtain acceptable parts, which results in wasted time and material. Sizing problems may also be encountered when the cut part is mounted to other parts, if the part's edges are irregular. It would be desirable for plasma cuts made in different directions by a single torch to have consistent and repeatable characteristics, such as the dross, kerf and bevel along cut edges.

### BRIEF SUMMARY OF THE INVENTION

The following summary presents a simplified summary in order to provide a basic understanding of some aspects of the devices, systems and/or methods discussed herein. This summary is not an extensive overview of the devices, systems and/or methods discussed herein. It is not intended to identify critical elements or to delineate the scope of such devices, systems and/or methods. Its sole purpose is to present some concepts in a simplified form as a prelude to the more detailed description that is presented later.

In accordance with a first aspect of the present invention, a system for plasma cutting is defined in claim 1. The plasma cutting system comprises a plasma cutting table. A gantry is movable along the plasma cutting table in a first direction. A torch carriage is movable along the gantry in a second direction that is perpendicular to the first direction. A torch holder is attached to the torch carriage and comprises a motor having a hollow shaft rotor. A plasma cutting torch is attached to the hollow shaft rotor for 360 degree rotation by the hollow shaft rotor around an axis of the plasma cutting torch.

In accordance with a second aspect of the present invention, a method of plasma cutting is defined in claim 10. The plasma cutting method comprises the step of providing a plasma cutting system that includes: a torch holder comprising a motor having a hollow shaft rotor, means for moving the torch holder in a first direction and in a second direction that is perpendicular to the first direction, and a plasma cutting torch attached to the hollow shaft rotor for 360 degree rotation by the hollow shaft rotor around an axis of the plasma cutting torch. The plasma cutting method further comprises the step of plasma cutting a curve portion through a workpiece while simultaneously rotating the plasma cutting torch about the axis by the hollow shaft rotor to maintain an angular orientation of the plasma cutting torch with respect to a kerf cut through the workpiece.

### BRIEF DESCRIPTION OF THE DRAWINGS

The foregoing and other aspects, features and embodiments of the invention will become apparent to those skilled in the art to which the invention relates upon reading the following description and claims with reference to the accompanying drawings, in which:
FIG. 1 is a perspective view of a system for plasma cutting;
FIG. 2 is a schematic view of a system for plasma cutting;
FIG. 3 is a perspective view of a portion of a system for plasma cutting;
FIG. 4 shows a plasma cutting operation;
FIG. 5 shows a plasma cutting operation;
FIG. 6 shows a plasma cutting operation;
FIG. 7 shows a plasma cutting operation;
FIG. 8 shows a plasma cutting operation;
FIG. 9 shows a plasma cutting operation; and
FIG. 10 shows a plasma cutting operation.

### DETAILED DESCRIPTION OF THE INVENTION

The present invention relates to systems for plasma cutting. The present invention will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the present invention. It may be evident, however, that the present invention can be practiced without these specific details. Additionally, other embodiments of the invention are possible and the invention is capable of being practiced and carried out in ways other than as described. The terminology and phraseology used in describing the invention is employed for the purpose of promoting an understanding of the invention and should not be taken as limiting.

As used herein, "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together. Any disjunctive word or phrase presenting two or more alternative terms, whether in the description of embodiments, claims, or drawings, should be understood to contemplate the possibilities of including one of the terms, either of the terms, or both terms. For example, the phrase "A or B" should be understood to include the possibilities of "A" or "B" or "A and B."

Embodiments of the present invention described herein are discussed in the context of a system for plasma cutting, and in particular a plasma cutting table. However, other embodiments are not limited to plasma cutting tables. For example, embodiments can be utilized with a plasma cutting robot, such as a robotic arm, and the plasma cutting torch and torch holder described herein can be incorporated into an end effector or end of arm tooling for a robot.

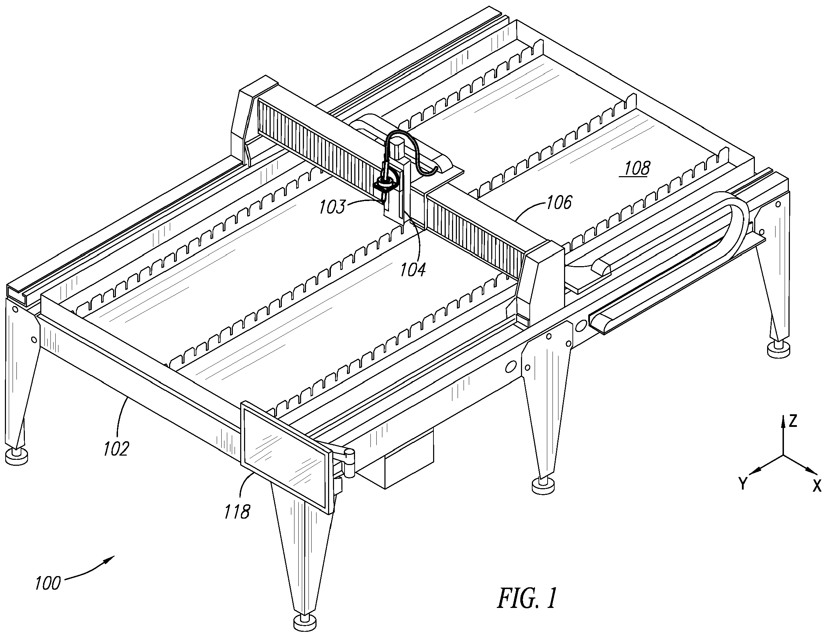

Figure 1 shows an example plasma cutting table 101. The plasma cutting table 101 has a main body 102 upon which a workpiece, such as a metal sheet or plate, is placed. The plasma cutting table 101 includes a gantry 106 that can move back and forth along the length of the cutting table's main body 102 in a first direction (e.g., in a Y direction). The gantry 106 can move on tracks or rails that extend along the sides of the table. A plasma cutting torch 103 is attached to a movable torch carriage 104 that is mounted on the gantry 106. The torch carriage 104 can move back and forth along the gantry 106 in a second direction (e.g., in an X direction) that is perpendicular to the first direction. The plasma cutting table 101 can be programmed to make precise cuts in a workpiece through controlled movements of the torch carriage 104 and gantry 106 in the X and Y directions, respectively. In certain embodiments, the torch carriage 104 can move the plasma cutting torch 103 vertically toward and away from the workpiece (e.g., in a Z direction), so that the torch can be moved in three perpendicular directions. In certain embodiments, the torch carriage 104 can also rotate or tilt the torch 103 in a plane perpendicular to the plane of the table (e.g., in the X-Z plane), to make beveled cuts.

As is known in the art, the plasma cutting table 101 includes a water tray 108 located adjacent the workpiece. During a plasma cutting operation, the water tray 108 is filled with water, and the water can be drained to allow the water chamber to be cleaned to remove accumulated dross and slag.

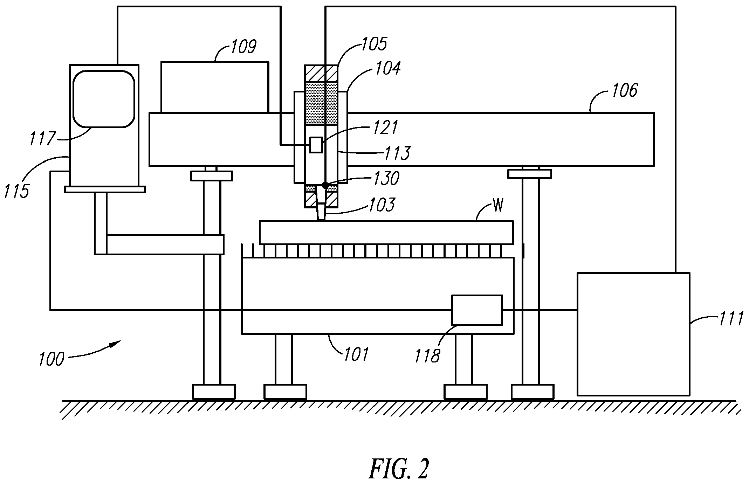

Figure 2 schematically shows various components of an example system 100 for plasma cutting. The system 100 for plasma cutting includes the plasma cutting table 101 and plasma cutting torch 103. The system 100 can include a torch height controller 105 which can be mounted to the gantry 106. The system 100 can also include a drive system 109 which is used to provide motion to the torch 103 relative to a workpiece W positioned in the table 101. A plasma cutting power supply 111 is coupled to the torch 103 to provide the desired current used to create the plasma arc. The system 100 can also include a gas console 113 that can be used to regulate gas flow rates and pressures used for both a plasma and shield gas during the cutting operation. The gas console 113 can also be used to select different gases depending in the cutting operation that is being performed. That is, certain gases may be used for some cutting operations, but would not be used for others. The system 100 can also include a computer numeric controller (CNC) 115, which can include a user input/display screen or user interface 117. The user interface 117 and controller 115 are used by a user to input and read cutting operational parameters and data, and allow the system 100 to be operated as an automated, programmable cutting system. Various input parameters can be input by the user into the controller 115, via the user interface 117 (or other means) including: torch current, material type, material thickness, cutting speed, torch height, plasma and shield gas composition, etc. The table 101 can also include a user interface 118 that is operatively connected to the CNC and/or the plasma cutting power supply 111. In embodiments employing a robotic arm rather than a gantry and torch carriage, the CNC can be a robot controller that controls the movements of the robotic arm. The system 100 can have many different configurations, and embodiments are not limited to that shown in Fig. 2, which is intended to be exemplary.

The controller 115 can be an electronic controller and can include one or more processors. For example, the controller 115 can include one or more of a microprocessor, a microcontroller, a digital signal processor (DSP), an application specific integrated circuit (ASIC), a field-programmable gate array (FPGA), discrete logic circuitry, or the like. The controller 115 can further include memory and may store program instructions that cause the controller to provide the functionality ascribed to it herein. The memory may include one or more volatile, non-volatile, magnetic, optical, or electrical media, such as read-only memory (ROM), random access memory (RAM), electrically-erasable programmable ROM (EEPROM), flash memory, or the like. The controller 115 can further include one or more analog-to-digital (A/D) converters for processing various analog inputs to the controller. The program instructions for the controller 115 can include cut charts or nesting software. Such instructions typically include cutting information including instructions for the system 100 when cutting various holes or contours, taking into account the sizes and shapes of the holes/contours and the material being cut. As is generally understood the controller 115 can allow a user to cut numerous successive holes, contours or a combination of holes and contours in a workpiece without stopping between cuts. For example, the operator can select a cutting program that includes both hole and contour cutting instructions, and the controller 115 will determine the order and positioning of the cuts, as well as the various parameters of the cuts based on the user input information.

The controller 115 can operate in a networked environment using logical and/or physical connections to one or more remote computers. Examples of the remote computers include workstations, server computers, routers, personal computers, and the like. The networked environment can include local area networks (LAN) and/or wide area networks (WAN). Such networking environments are commonplace in offices, enterprise-wide computer networks, intranets and the Internet. When used in a LAN networking environment, the controller 115 is connected to the local network through a network interface or adapter. When used in a WAN networking environment, the controller 115 typically includes a modem or network interface, or is connected to a communications server on the LAN, or has other means for establishing communications over the WAN, such as the Internet. In a networked environment, program modules implemented by the controller 115, or portions thereof, may be stored in a remote memory storage device. It will be appreciated that network connections described herein are exemplary and other means of establishing communications links between devices may be used.

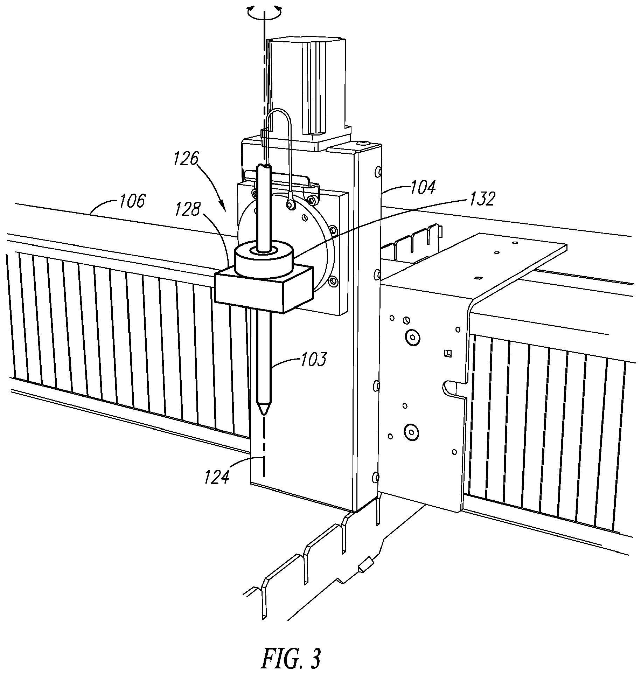

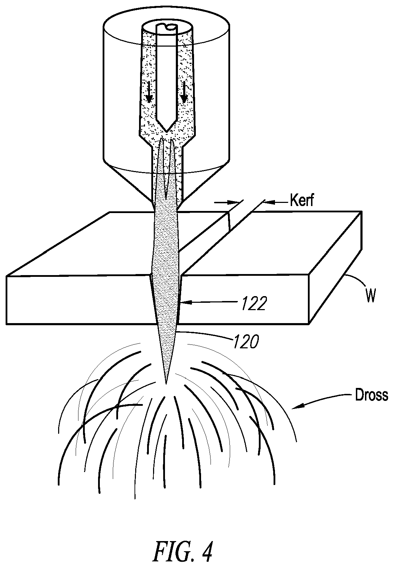

Figure 3 shows the plasma cutting torch 103 and torch carriage 104 in more detail, and Fig. 4 shows an example plasma cutting operation. As noted above, the plasma jet or plasma arc 120 may not be symmetrical or straight, and its cut characteristics and quality can change with the cutting direction. The asymmetries of the plasma jet 120 can result in the cut edges on different portions of the workpiece W having different characteristics, which negatively impacts the accuracy of the cut. For example, as the torch is moved about the workpiece W in different directions, the edges of the cut may have different bevels, amount of dross, etc. Some of the dross may adhere to the underside of the workpiece W, and its characteristics, such as amount and location along the cut edge, can change with cut direction. A bevel angle 122 due to the shape of the plasma jet 120 can be seen in Fig. 4, and the bevel angle can also change with cut direction. In order to reduce these irregularities during plasma cutting, and provide more repeatable and consistent cuts, the plasma cutting torch 103 of the present invention is rotated when changing cutting directions, to maintain a constant angular orientation of the torch with respect to the cut edge and the kerf cut through the workpiece. The CNC is programmed to control the movements of the torch in the X and Y directions when cutting a curved portion or otherwise changing directions of the cut, while simultaneously rotating the torch about a longitudinal axis 124 of the torch. The torch 103 is rotated according to the direction of the cut to maintain the angular orientation of the torch to the kerf and the cut edge, which results in maintaining a common orientation and cutting edge of the plasma arc 120 along the edge of the cut part. The entirety of the cut can be made using the same lateral side of the plasma arc 120 by rotating the torch during cutting, and any asymmetries or other irregularities present in the plasma arc will impact the cut to a much lesser degree. Once suitable edge characteristics are achieved, subsequent cut parts will have repeatable characteristics, provided the plasma arc has not changed significantly (e.g., due to consumable deterioration).

The torch carriage 104 includes torch holder 126 to which the torch 103 is secured. The torch holder 126 is attached to the torch carriage 104 and is capable of rotating the torch 103 during plasma cutting. In the example embodiment shown, the torch holder 126 includes a motor 128 that rotates the torch 103. In certain embodiments, the motor 128 can rotate the torch 103 through at least 360°, so that the torch can be completely rotated during cutting. The motor 128 can have a hollow shaft rotor 132 to which the torch 103 is attached. In certain embodiments, the torch 103 is mounted within the hollow shaft rotor 132, coaxially with the rotor, so that the rotor rotates with the torch around the axis 124 of the torch. Example motors 128 for rotating the torch 103 include permanent magnet, hollow shaft torque motors, hollow shaft servo motors, hollow shaft stepper motors, and the like. The CNC can control the rotational angle of the motor 128 and torch 103 as desired during plasma cutting via the motor 128. In particular, the CNC can control the rotational angle of the motor 128 and torch 103 so that the angular orientation of the torch with respect to the kerf and cut edges of the workpiece W remains substantially constant during cutting. The motor 128 can include a positional feedback device, such as an encoder, that transmits angular positional data to the CNC. The torch holder 126 can include a bracket that is cantilevered from the torch carriage 104, and a stator of the motor 128 can be secured to an upper surface of the bracket. In other embodiments, the stator itself is cantilevered from the torch carriage 104, and the motor 128 functions as the torch holder. The hollow shaft rotor 132 and/or the torch 103 can include clamping devices or fasteners that secure and axially align the torch within the rotor.

In certain embodiments, the torch 103 can include rotary connectors 130 (Fig. 2) to connect the torch to the power supply, gas console, etc., so that the torch can be rotated without twisting its supply cables and/or hoses. Rotary connectors can be particularly useful if torch rotations exceeding 360° are desired.

In addition to receiving angular position feedback data from the motor 128, the CNC can also receive position feedback data from an inertial sensor 121 (Fig. 2), such as an inertial measurement unit (IMU), located on the torch 103 or torch carriage 104. In exemplary applications, the inertial sensor is a module which senses and provides inertial feedback data, such as inertial measurement signals or data, to the CNC so that the CNC can use this data to track and control the movement of the torch 103. An example inertial sensor contains a 3-axis, MEMS-type accelerometer and a 3-axis gyroscope, each of which are capable of outputting feedback data to the CNC (e.g., digital or analog feedback data). In other exemplary embodiments, only one of an accelerometer and/or gyroscope is utilized. It should also be noted that in some exemplary embodiments, the gyroscope sensor is of a digital type. The use of an inertial sensor 121 (Fig. 2) attached to the torch is beneficial when a bevel type cutting operation is performed, to aid in proper torch positioning when the torch head tilts/rotates in two or more axes to provide angled cuts. In other embodiments, gyro sensors can be mounted on a gear wheel (e.g., in the mechanical drive system) to generate instantaneous velocity readings and feedback, such that angular velocities can be converted to linear velocities. The plasma cutting table can also include encoders associated with motors that move the gantry and torch carriage, to generate positional data for the CNC. In certain embodiments, the inertial sensor 121 can transmit the inertial measurement data to a more local controller, such as the gas console 113, which forwards the inertial measurement data (or data based the inertial measurement data) to the CNC.

The inertial measurement data can be used by the CNC to correct errors in torch positioning. In particular, errors in torch angle or bevel can be corrected from the inertial measurement data by adjusting the tilt of the torch. The inertial measurement signal(s) from the inertial sensor 121 can be processed by the CNC to determine the current angle of the torch in real time, whether vertical or offset from vertical. The signals may be noisy, and the CNC can implement appropriate sampling and filtering and/or other known signal processing (e.g., integrating measured angular velocity, Kalman filtering, etc.) to determine the angle of the torch. In certain embodiments employing both a gyroscope and accelerometers, the gyroscope can be automatically calibrated to align the angle of the gyroscope with the angle of the accelerometers. The automatic calibration can occur at "power on", for example. The angle of the torch and any error in torch angle can be displayed on either of the user interfaces discussed above.

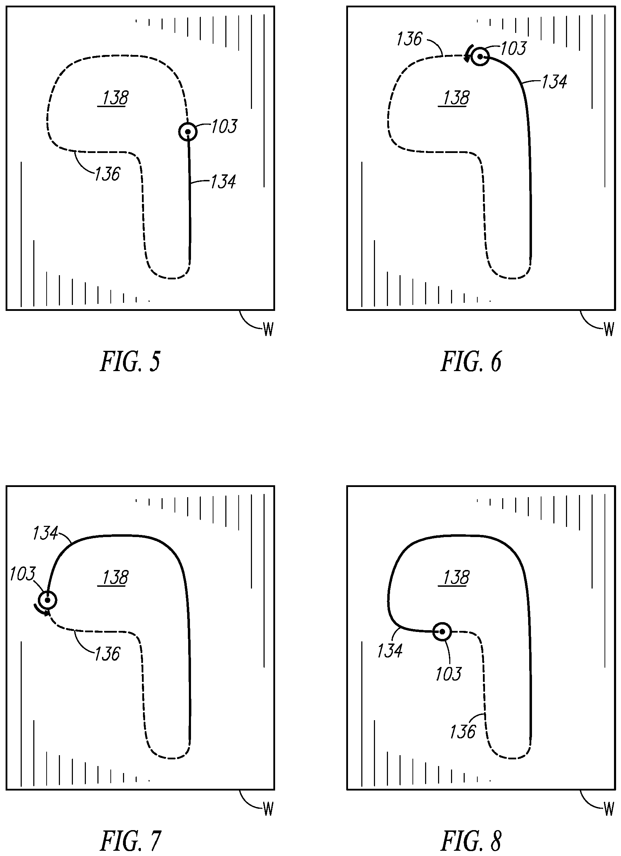

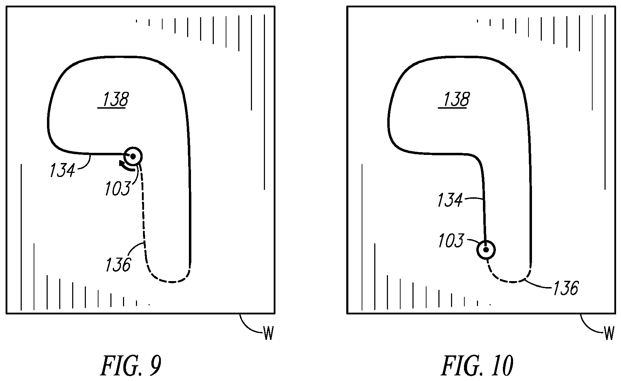

Figures 5-10 show an example plasma cutting operation during which the torch 103 is rotated to maintain the angular orientation of the torch with respect to a kerf 134 cut through the workpiece W. The kerf 134 is shown in solid line in Figs. 5 - 10. The remaining uncut portion 136 of the part 138 to be cut from the workpiece W is shown in dashed lines. The torch 103 includes an orientation mark near the kerf 134 to help illustrate how the angular orientation of the torch changes along the cutting path. It can be seen in Figs. 5 - 7 that as the torch 103 transitions from cutting a straight portion of the part 138 to a curved portion of the part, the torch is rotated in a first direction (e.g., counterclockwise). Between Figs. 8 and 9, the torch 103 is rotated in a second direction (e.g., clockwise) to cut another curved portion of the part. As the torch 103 moves along the contour of the part 138, the orientation mark on the torch remains adjacent the kerf 134 due to the torch being rotated by the hollow shaft rotor on the torch holder. The torch 103 can be rotated clockwise and counterclockwise as needed, based on the shape of the cut to be made, to maintain a common cutting edge of the plasma arc adjacent to the cut edge of the part.

It should be evident that this disclosure is by way of example and that various changes may be made by adding, modifying or eliminating details without departing from the scope of the present invention as defined in the appended claims.

### REFERENCE NUMBERS

- 100: system
- 101: cutting table
- 102: main body
- 103: cutting torch
- 104: torch carriage
- 105: height troller
- 106: gantry
- 108: water tray
- 109: drive system
- 111: cutting power supply
- 113: gas console
- 115: computer numeric controller (CNC)
- 117: user interface
- 118: user interface
- 120: plasma arc
- 121: inertial sensor
- 122: bevel angle
- 124: axis
- 126: torch holder
- 128: motor
- 132: shaft rotor
- 134: kerf cut
- 136: uncut portion
- 138: part

- W: workpiece

## Claims

1. A system (100) for plasma cutting, the system (100) comprising:
a plasma cutting table (101);
a gantry (106) movable along the plasma cutting table (101) in a first direction;
a torch carriage (104) movable along the gantry (106) in a second direction that is perpendicular to the first direction;
**characterized by**
a torch holder (126) attached to the torch carriage (104) and comprising a motor (128) having a hollow shaft rotor (132); and
a plasma cutting torch (103) attached to the hollow shaft rotor (132) for 360 degree rotation by the hollow shaft rotor (132) around an axis (124) of the plasma cutting torch (103).

2. The system of claim 1, wherein the motor (128) is a permanent magnet torque motor.

3. The system of claim 1 or 2, wherein the plasma cutting torch (103) is mounted within the hollow shaft rotor (132).

4. The system (100) of one of the claims 1 to 3, wherein the plasma cutting torch (103) is mounted coaxially with the hollow shaft rotor (132).

5. The system of one of the claims 1 to 4, further comprising a computer numeric controller (115) configured to control movement of the plasma cutting torch (103) to cut a curve portion through a workpiece (W) on the plasma cutting table (101), while simultaneously rotating the plasma cutting torch (103) about the axis (124) by the hollow shaft rotor (132), so as to maintain a common cutting edge of a plasma arc along the curve portion.

6. The system of claim 5, wherein the computer numeric controller (115) is configured to control rotation of the plasma cutting torch (103) to maintain an angular orientation of the plasma cutting torch (103) with respect to a kerf cut (134) through the workpiece (W).

7. The system of claim 5 or 6, further comprising an inertial sensor (121) coupled to the plasma cutting torch (103) and configured to communicate an inertial measurement signal to the computer numeric controller (115).

8. The system of one of the claims 1 to 7, wherein the plasma cutting torch (103) further comprises a rotary connecter that connects the plasma cutting torch (103) to a plasma cutting power supply (111).

9. The system of one of the claims 1 to 8, further comprising a computer numeric controller configured to control movement of the plasma cutting torch to cut a curve portion through a workpiece on the plasma cutting table, while simultaneously rotating the plasma cutting torch by the hollow shaft rotor, so as to maintain an angular orientation of the plasma cutting torch with respect to a kerf cut through the workpiece; wherein preferably: the computer numeric controller is configured to control rotation of the plasma cutting torch to maintain a common cutting edge of a plasma arc along the curve portion.

10. A method of plasma cutting, the method being **characterized by** the steps of:
providing a plasma cutting system (100) comprising:
a torch holder (126) comprising a motor (128) having a hollow shaft rotor (132);
means for moving the torch holder (126) in a first direction and in a second direction that is perpendicular to the first direction;
the method further comprising:
providing a plasma cutting system with a plasma cutting torch (103) attached to the hollow shaft rotor (132) for 360 degree rotation by the hollow shaft rotor (132) around an axis (124) of the plasma cutting torch (103); and by plasma cutting a curve portion through a workpiece (W) while simultaneously rotating the plasma cutting torch (103) about the axis (124) by the hollow shaft rotor (132) to maintain an angular orientation of the plasma cutting torch (103) with respect to a kerf cut (134) through the workpiece (W).

11. The method of claim 10, wherein the plasma cutting torch is mounted within the hollow shaft rotor; and/or wherein the plasma cutting torch is mounted coaxially with the hollow shaft rotor.

12. The method of claim 10 or 11, wherein the motor is a permanent magnet torque motor; and/or wherein the step of plasma cutting the curve portion through the workpiece further comprises maintaining a common cutting edge of a plasma arc along the curve portion; and/or wherein the plasma cutting system further comprises a computer numeric controller, and an inertial sensor coupled to the plasma cutting torch and configured to communicate an inertial measurement signal to the computer numeric controller; and/or wherein the plasma cutting torch further comprises a rotary connecter that connects the plasma cutting torch to a plasma cutting power supply.

## Patentansprüche

1. System (100) zum Plasmaschneiden, wobei das System (100) umfasst:
einen Plasmaschneidtisch (101);
ein Gerüst (106), das entlang dem Plasmaschneidtisch (101) in einer ersten Richtung bewegbar ist;
einen Brennerschlitten (104), der entlang des Gerüsts (106) in einer zweiten Richtung bewegbar ist, die senkrecht zu der ersten Richtung ist;
**gekennzeichnet durch**
einen Brennerhalter (126), der an dem Brennerschlitten (104) angebracht ist und einen Motor (128) mit einem Hohlwellenrotor (132) umfasst; und
einen Plasmaschneidbrenner (103), der an dem Hohlwellenrotor (132) für eine 360°-Rotation durch den Hohlwellenrotor (132) um eine Achse (124) des Plasmaschneidbrenners (103) angebracht ist.

2. System nach Anspruch 1, wobei der Motor (128) ein Permanentmagnet-Drehmomentmotor ist.

3. System nach Anspruch 1 oder 2, wobei der Plasmaschneidbrenner (103) innerhalb des Hohlwellenrotors (132) montiert ist.

4. System (100) nach einem der Ansprüche 1 bis 3, wobei der Plasmaschneidbrenner (103) koaxial zum Hohlwellenrotor (132) montiert ist.

5. System nach einem der Ansprüche 1 bis 4, ferner umfassend eine numerische Computersteuerung (115), die konfiguriert ist, um die Bewegung des Plasmaschneidbrenners (103) zu steuern, um einen Kurvenabschnitt durch ein Werkstück (W) auf dem Plasmaschneidtisch zu schneiden (101), während gleichzeitig der Plasmaschneidbrenner (103) durch den Hohlwellenrotor (132) um die Achse (124) gedreht wird, um eine gemeinsame Schneidkante eines Plasmalichtbogens entlang des Kurvenabschnitts beizubehalten.

6. System nach Anspruch 5, wobei die numerische Computersteuerung (115) so konfiguriert ist, dass sie die Drehung des Plasmaschneidbrenners (103) steuert, um eine Winkelausrichtung des Plasmaschneidbrenners (103) in Bezug auf eine Schnittfuge (134) durch das Werkstück (W) beizubehalten.

7. System nach Anspruch 5 oder 6, das ferner einen Trägheitssensor (121) umfasst, der mit dem Plasmaschneidbrenner (103) gekoppelt und konfiguriert ist, um ein Trägheitsmesssignal an die computernumerische Steuerung (115) zu übermitteln.

8. System nach einem der Ansprüche 1 bis 7, wobei der Plasmaschneidbrenner (103) ferner einen Drehverbinder umfasst, der den Plasmaschneidbrenner (103) mit einer Plasmaschneidstromversorgung (111) verbindet.

9. System nach einem der Ansprüche 1 bis 8, ferner umfassend eine numerische Computersteuerung, die dazu konfiguriert ist, die Bewegung des Plasmaschneidbrenners zu steuern, um einen Kurvenabschnitt durch ein Werkstück auf dem Plasmaschneidtisch zu schneiden, während gleichzeitig der Plasmaschneidbrenner durch den Hohlwellenrotor gedreht wird, um eine Winkelausrichtung des Plasmaschneidbrenners in Bezug auf eine durch das Werkstück geschnittene Schnittfuge beizubehalten; wobei vorzugsweise: die numerische Computersteuerung so konfiguriert ist, dass sie die Drehung des Plasmaschneidbrenners steuert, um eine gemeinsame Schneidkante eines Plasmalichtbogens entlang des Kurvenabschnitts aufrechtzuerhalten.

10. Verfahren zum Plasmaschneiden, wobei das Verfahren durch die Schritte gekennzeichnet ist:
Bereitstellen eines Plasmaschneidsystems (100), umfassend:
einen Brennerhalter (126), der einen Motor (128) mit einem Hohlwellenrotor (132) umfasst;
Mittel zum Bewegen des Brennerhalters (126) in einer ersten Richtung und in einer zweiten Richtung, die senkrecht zu der ersten Richtung ist;
wobei das Verfahren ferner umfasst:
Bereitstellen eines Plasmaschneidsystems mit einem an dem Hohlwellenrotor (132) befestigten Plasmaschneidbrenner (103) zur 360°-Drehung durch den Hohlwellenrotor (132) um eine Achse (124) des Plasmaschneidbrenners (103); und durch Plasmaschneiden eines Kurvenabschnitts durch ein Werkstück (W), während gleichzeitig der Plasmaschneidbrenner (103) durch den Hohlwellenrotor (132) um die Achse (124) gedreht wird, um eine Winkelausrichtung des Plasmaschneidbrenners (103) in Bezug auf einen Kerbschnitt (134) durch das Werkstück (W) aufrechtzuerhalten.

11. Verfahren nach Anspruch 10, wobei der Plasmaschneidbrenner innerhalb des Hohlwellenrotors angebracht ist; und/oder wobei der Plasmaschneidbrenner koaxial mit dem Hohlwellenrotor angebracht ist.

12. Verfahren nach Anspruch 10 oder 11, wobei der Motor ein Permanentmagnet-Drehmomentmotor ist; und/oder wobei der Schritt des Plasmaschneidens des Kurvenabschnitts durch das Werkstück ferner das Aufrechterhalten einer gemeinsamen Schneidkante eines Plasmabogens entlang des Kurvenabschnitts umfasst; und/oder wobei das Plasmaschneidsystem ferner eine numerische Computersteuerung und einen Trägheitssensor umfasst, der mit dem Plasmaschneidbrenner gekoppelt und konfiguriert ist, um ein Trägheitsmesssignal an die numerische Computersteuerung zu übermitteln; und/oder wobei der Plasmaschneidbrenner ferner einen Drehverbinder umfasst, der den Plasmaschneidbrenner mit einer Plasmaschneidstromversorgung verbindet.

## Revendications

1. Système (100) de coupage plasma, le système (100) comprenant :
une table de découpe au plasma (101);
un portique (106) mobile le long de la table de coupage au plasma (101) dans une première direction ;
un chariot de torche (104) mobile le long du portique (106) dans une seconde direction qui est perpendiculaire à la première direction ;
**caractérisé par**
un porte-torche (126) fixé au chariot de torche (104) et comprenant un moteur (128) ayant un rotor à arbre creux (132); et
une torche de coupage au plasma (103) fixée au rotor à arbre creux (132) pour une rotation de 360 degrés par le rotor à arbre creux (132) autour d'un axe (124) de la torche de coupage au plasma (103).

2. Système selon la revendication 1, dans lequel le moteur (128) est un moteur couple à aimant permanent.

3. Système selon la revendication 1 ou 2, dans lequel la torche de coupage au plasma (103) est montée à l'intérieur du rotor à arbre creux (132).

4. Système (100) selon l'une des revendications 1 à 3, dans lequel la torche de coupage plasma (103) est montée coaxialement au rotor à arbre creux (132).

5. Système selon l'une des revendications 1 à 4, comprenant en outre un contrôleur numérique de l'ordinateur (115) configuré pour contrôler le mouvement de la torche de coupage au plasma (103) pour couper une partie courbe à travers une pièce (W) sur la table de coupage au plasma (101), tout en faisant simultanément tourner la torche de coupage plasma (103) autour de l'axe (124) par le rotor à arbre creux (132), de manière à maintenir une arête de coupe commune d'un arc plasma le long de la partie courbe.

6. Système selon la revendication 5, dans lequel le contrôleur numérique de l'ordinateur (115) est configuré pour contrôler la rotation de la torche de coupage au plasma (103) pour maintenir une orientation angulaire de la torche de coupage au plasma (103) par rapport à un trait de coupe (134) à travers la pièce (W).

7. Système selon la revendication 5 ou 6, comprenant en outre un capteur inertiel (121) couplé à la torche de coupage plasma (103) et configuré pour communiquer un signal de mesure inertielle au contrôleur numérique de l'ordinateur (115).

8. Système selon l'une des revendications 1 à 7, dans lequel la torche de coupage plasma (103) comprend en outre un connecteur rotatif qui relie la torche de coupage plasma (103) à une alimentation de coupage plasma (111).

9. Système selon l'une des revendications 1 à 8, comprenant en outre un contrôleur numérique de l'ordinateur configuré pour contrôler le mouvement de la torche de coupage au plasma pour couper une partie courbe à travers une pièce sur la table de coupage au plasma, tout en faisant simultanément tourner la torche de coupage au plasma par le rotor à arbre creux, de façon à maintenir une orientation angulaire de la torche de coupage au plasma par rapport à un trait de coupe traversant la pièce; dans lequel de préférence : le contrôleur numérique d'ordinateur est configuré pour contrôler la rotation de la torche de coupage au plasma pour maintenir un bord de coupe commun d'un arc au plasma le long de la partie courbe.

10. Procédé de coupage plasma, le procédé étant **caractérisé par** les étapes de:
fournir un système de coupage plasma (100) comprenant :
un porte-torche (126) comprenant un moteur (128) ayant un rotor à arbre creux (132);
des moyens pour déplacer le porte-torche (126) dans une première direction et
dans une seconde direction perpendiculaire à la première direction;
le procédé comprenant en outre :
fournir un système de coupage au plasma avec une torche de coupage au plasma (103) fixée au rotor à arbre creux (132) pour une rotation de 360 degrés par le rotor à arbre creux (132) autour d'un axe (124) de la torche de coupage au plasma (103); et par
coupant au plasma une partie courbe à travers une pièce (W) tout en faisant tourner simultanément la torche de coupage au plasma (103) autour de l'axe (124) par le rotor à arbre creux (132) pour maintenir une orientation angulaire de la torche de coupage au plasma (103) par rapport à un trait de coupe (134) à travers la pièce (W).

11. Procédé selon la revendication 10, dans lequel la torche de coupage au plasma est montée à l'intérieur du rotor à arbre creux; et/ou dans lequel la torche de coupage au plasma est montée coaxialement avec le rotor à arbre creux.

12. Procédé selon la revendication 10 ou 11, dans lequel le moteur est un moteur couple à aimant permanent; et/ou dans lequel l'étape de découpe au plasma de la partie courbe à travers la pièce comprend en outre le maintien d'un bord de coupe commun d'un arc plasma le long de la partie courbe; et/ou dans lequel le système de coupage plasma comprend en outre un contrôleur numérique de l'ordinateur, et un capteur inertiel couplé à la torche de coupage plasma et configuré pour communiquer un signal de mesure inertiel au contrôleur numérique de l'ordinateur; et/ou dans lequel la torche de coupage au plasma comprend en outre un connecteur rotatif qui connecte la torche de coupage au plasma à une alimentation électrique de coupage au plasma.
